Europäisches Patentamt

European Patent Office

Office européen des brevets

(11) Publication number: **0 412 959 B1**

# EUROPEAN PATENT SPECIFICATION

(45) Date of publication of patent specification: **10.02.93**  (51) Int. Cl.⁵: **F25B 49/02**

(21) Application number: **87901723.4**

(22) Date of filing: **20.02.87**

(86) International application number:
**PCT/SE87/00087**

(87) International publication number:
**WO 87/05097 (27.08.87 87/19)**

(54) **A METHOD FOR ANALYSING AND CONTROLLING A COOLING PROCESS.**

(30) Priority: **21.02.86 SE 8600808**

(43) Date of publication of application:
**20.02.91 Bulletin  91/08**

(45) Publication of the grant of the patent:
**10.02.93 Bulletin  93/06**

(84) Designated Contracting States:
**DE FR GB IT**

(56) References cited:
**DE-A- 2 638 861**
**US-A- 3 577 743**
**US-A- 4 325 223**

**kylteknik, by mats backstrom. almquist u.
wiksells boktryckery ab, uppsala 1970, 3 rs
edition, 6.63-6,76**

**kylteknik, allman kurs by bo pierre, inst. for
mekaniks vaermeteori och kylteknik, royal
inst. for techn. stockholm, 1972, chapter ii**

(73) Proprietor: **ETM INSTRUMENT AKTIEBOLAG
Box 10022
S-100 55 Stockholm(SE)**

(72) Inventor: **BERGLÖF, Klas
Beckholmsvägen 4
S-115 42 Stockholm(SE)**
Inventor: **BACKMARK, Hans
Ahlsellvägen 14
S-115 42 Stockholm(SE)**
Inventor: **SANDSTRÖM, Bengt
Norra Stationsgatan 113
S-113 33 Stockholm(SE)**

(74) Representative: **Axelsson, Rolf et al
Kransell & Wennborg AB Box 27834
S-115 93 Stockholm(SE)**

Rank Xerox (UK) Business Services

## Description

The present invention relates to a method for determining the actual coefficient of performance of a compressor refrigeration process, said process being carried out with the aid of a refrigerant, or coolant, which is circulated through a closed circuit which incorporates a compressor, a condenser, an expansion device, and an evaporator.

The term refrigeration process as used shall be understood to include, in accordance with accepted practice, all types of compressor-driven evaporation or vaporization processes, irrespective of whether such processes are applied in heat pump systems, air conditioning systems, refrigerating systems or cooling systems, and irrespective of whether the apparatus used in conjunction therewith are stationary or mobile. The invention is described in the following primarily with reference to a heat pump cycle. It will be understood by all those of normal skill in this art, however, that when reference is made in the following description and claims to the coefficient of performance, heating power (heat emission) etc. analogous conditions and methods of calculation with regard to cooling efficiency factor, cooling power etc. are to be found in the aforesaid cooling and refrigeration systems.

There are many instances when it is desirable to know the working efficiency of a heat pump system. Such is the case, for instance, when installing and finely adjusting or tuning heat pump systems, when carrying out functional checks, or when servicing such systems. The measuring methods most used today utilize a combination of flow and temperature measurements. This normally involves measuring the flow rate of the heat carrier and/or the cold carrier (brine) and the temperature difference across the condenser and evaporator respectively, so as to establish thereby the heat emitted or the cold absorbed, and comparing the measuring results with the amount of electrical energy consumed. This method, however, is encumbered with several serious drawbacks. Among other things the accuracy to which the working efficiency of a heat pump system can be determined by measuring the rate of flow of the heat carrier and the aforesaid temperature difference, when said difference is small, is very low.

The most serious drawbacks encountered with the aforesaid method are caused by the fact that in order to measure the flow rate of the circulating medium it is necessary to install flow meters in the various circuits concerned, which is both expensive and time consuming. Thus, in order to connect-up the flow meters it is necessary first to shut down and drain the system and then to cut the pipes in a manner which will enable the flow meters to be installed. The system must then be started up and allowed to run until substantially stable temperature conditions are reached. The measuring process will normally take a full working day to complete.

Because the rate of flow and temperature are not read-off simultaneously, it cannot be certain that the result obtained is accurate, since the measurement values read-off do not correspond exactly with one another. This further impairs the overall accuracy of the measuring result, since processes of this kind are normally relatively unstable with constantly varying parameters.

It can be said in summary that although the methods applied today may be suitable for determining yearly average values, or corresponding values, they are not suitable for measuring the efficiency of a system when tuning the system, inspecting the system, or carrying out corresponding system procedures, since when applying the known method it is not possible to obtain continuously information that relates to the functioning of the system. Furthermore, the known method will only provide data concerning the overall function of the system and will not provide detailed information relating to process data and the condition of the various system components. When tuning a system it is necessary, for instance, to obtain simultaneously information relating to a number of parameters that are determinative of the coefficient of performance and the heating power, or heat emission, of the system, where, for instance, a certain control procedure can result in a higher heat emission with a lower coefficient of performance, and vice versa.

US-A-4 325 223 discloses a system for managing energy in refrigeration systems which requires a multiciply of sensors to be connected. The system is rather elaborated and costly and is intended to be permanently installed in a large refrigeration system.

The main objective of the present invention is therefore to provide a method of determining the actual coefficient of performance of a compressor refrigeration process which can be carried out very rapidly and at low cost and which will provide continuous documentation of essential process parameters.

Another objective of the invention is to enable such a method to be applied for the purpose of automatically regulating or controlling refrigeration process.

A further objective is to provide regulating apparatus for controlling a refrigeration or cooling process on the basis of process data obtained by the inventive measuring method.

In order to achieve these objectives it is important to provide a measuring method which does not require the rate of flow to be measured. The present invention is based on the realization that this can be avoided and the aforesaid objectives achieved when the information contained in the refrigerant diagram of the refrigerant used is utilized rationally. In this respect it suffices to determine at a given moment the pressure and temperature simultaneously at three points in the closed refrigerant cycle, and to use these measurement values to determine three key points on the refrigerant diagram. The values of essential basic parameters of the refrigeration process, such as evaporation temperature, condensation temperature, overheating, undercooling,and the ideal coefficient of process performance, can then be determined with a starting point from the aforesaid three key points on the diagram.

One of the problems instrumental in the failure of earlier methods of this kind was that when utilizing information obtained from a refrigerant diagram, it was considered necessary to obtain a value of the mass flow in order to establish the actual or prevailing, coefficient of process performance. Consequently, it has been considered hitherto necessary either to measure the rate of flow, which is an excessively expensive and highly complicated procedure, or to acquire sufficient compressor data to enable the mass flow to be calculated, which has not been found possible in practice.

The problem of determining the mass flow can be resolved in accordance with the invention by calculating or empirically determining instead a correction factor which, inter alia, compensates for process losses, whereafter the actual coefficient of performance can be calculated as the product of the ideal coefficient of performance and the aforesaid correction factor, without using the mass flow.

The most important losses can be referred to thermal losses in the compressor, and practical tests have surprisingly shown that the actual or prevailing coefficient of performance can be determined very accurately by using as said correction factor, with which the ideal coefficient of performance is multiplied, a calculated or empirical value of the thermal efficiency $\eta_T$ of the compressor. The thermal efficiency $\eta_T$ of the compressor is therewith defined as the relationship between the total energy input to the refrigerant from the compressor and the total driving energy supplied to the compressor, normally electrical energy.

In this regard, test runs have shown that in the case of conventional systems which include hermetical or semi-hermetical compressors a satisfactorily accurate result can be obtained when using a value within the range of about 90% to about 97% as an empirical value of $\eta_T$. A lower value applies in the case of open compressors. Thus, the invention enables expensive and time consuming mass flow calculations to be avoided and, in the majority of cases in conjunction with the calculation of the true coefficient of performance, to be replaced with the use of a pre-determined correction factor.

Subsequent to calculating the actual or true coefficient of performance, the heating power generated by the process can be calculated, in accordance with the invention, as the product of the coefficient of performance and the drive energy supplied to the compressor.

Other characteristic features of the method according to the invention are set forth in the following Claims.

A refrigeration or cooling process can be automatically controlled with extreme accuracy when applying the aforedescribed method, wherewith the adjustable expansion device used to steer the process can be regulated, inter alia, on the basis of the coefficient of performance and/or heat emission calculated in accordance with the aforegoing.

The inventive method can also be used as a basis for the construction of control apparatus for controlling a refrigeration process, said apparatus being characterized in that it includes means for calculating the true coefficient of performance of the process and/or the heating power generated by the process, in accordance with the aforegoing, and in that process control means are actuated thereby. The invention will now be described in more detail with reference to the accompanying drawings, in which

Figure 1 is a principle diagram of a single stage refrigeration process;

Figure 2 illustrates a refrigerant diagram of a refrigerant, chosen by way of example, incorporating a refrigeration process characteristic;

Figure 3 is a block schematic of apparatus used when carrying out the method according to the invention.

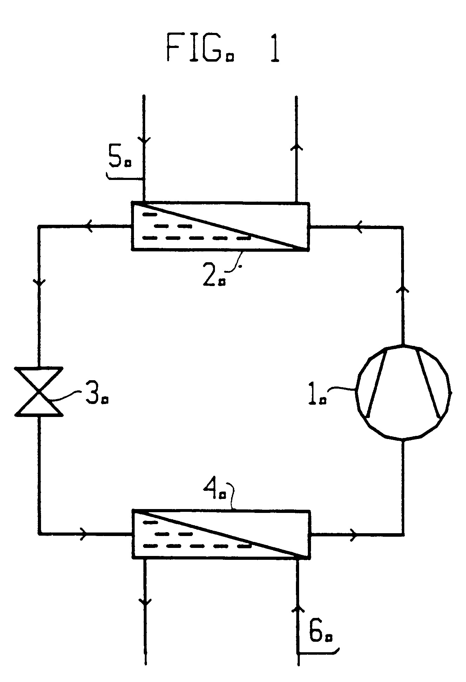

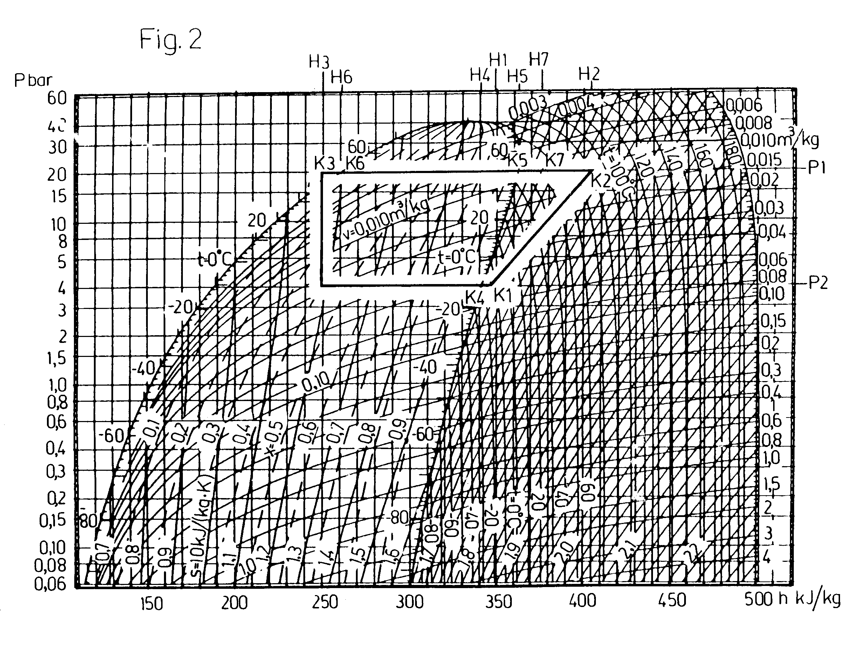

The compressor-driven refrigeration process illustrated in Figure 1, which process is assumed here to be applied in a heat pump, represents an evaporation process which passes cyclicly through four stages. The process requires a refrigerant, or coolant, which is circulated around a closed circuit incorporating a compressor 1, a condenser 2, an expansion valve 3, and an evaporator 4. Ammonia and chloro-fluoro-hydrocarbons (FREON) are those refrigerants most used today. The physical properties of these refrigerants are relatively well known and are presented in the literature in both diagram form and in the form of mathematical formuli. Since it is normally the energy differences which are of interest, the refrigerants are most often presented in so-called i log p diagrams, where i stands for enthalpy and p stands for pressure. These diagrams are designated refrigerant diagrams, and an example of one such diagram is given in Figure 2.

The process illustrated in Figure 1 can be divided into the following four stages:

1) Refrigerant in gas phase and at low pressure is drawn by suction into the compressor 1 and is compressed therein. Gas under high pressure has a high boiling point.

2) The gaseous refrigerant of high pressure flows into the condenser 2, in which the refrigerant is cooled by a heat carrier which flows through the conduit 5 and which absorbs heat from the refrigerant. Cooling of the refrigerant continues to a temperature beneath the boiling point of the refrigerant, thereby condensing the vapour.

3) The condensed refrigerant flows to the expansion valve 3, in which the refrigerant is expanded so that the pressure falls. The boiling point of the refrigerant is low at this low pressure.

4) The low pressure liquid refrigerant is lead into the evaporator 4, in which the refrigerant is heated and vapourized by a cold carrier flowing in through the conduit 6, whereafter the gaseous refrigerant is again drawn into the compressor 1 and the cycle is repeated.

Thus, the principle of a heat pump system is to transfer heat from a cold carrier in the conduit 6, which may have a relatively low temperature, to a heat carrier in the conduit 5, which has a relatively high temperature. The cold carrier and heat carrier may comprise any desired medium, and are most often water or air.

In order to be able to assess the efficiency of the refrigerating process, and also the condition of the apparatus components, pressure and temperature measurement are made simultaneously on the refrigerant, in accordance with the present invention, in order to determine the three key points on the refrigerant diagram for the refrigerant used, which points define the course taken by the refrigerating process. The values of other parameters required to carry out the method can then be determined on the basis of these three key points.

The pressure and temperature are primarily measured at locations upstream and downstream of the compressor and downstream of the condenser respectively, it being assumed that the pressure downstream of the condenser is the same as the pressure downstream of the compressor. The pressure sensors are mounted on the service outlets normally provided on the respective high pressure and low pressure side of the components, while the temperature sensors are mounted on the connecting pipes.

By simultaneously measuring pressure and temperature at the aforesaid positions in the refrigerant cycle, a clear and precise determination is obtained of the points K1, K2 and K3 shown in the refrigerant diagram in Figure 2, in the aforesaid order. These points can either be determined directly in the diagram, or with the aid of mathematical calculations.

However, in order to achieve the results desired in accordance with the invention, it is necessary to utilize a computer controlled data logger, for simultaneously reading and collecting the aforesaid measurement values, and the key points K1, K2 and K3 must be determined in the computer by comparing the measurement values collected therein with information defining the refrigerant diagram stored in the computer. In this regard, the computer may either be programmed with the diagram as such, e.g. in the form of tabulated values, or more suitably with underlying or basic mathematical functions, which affords greater accuracy. The invention, however, is not contingent upon the manner in which the information defining the diagram is stored in the computer, and hence this aspect will not be described in detail here.

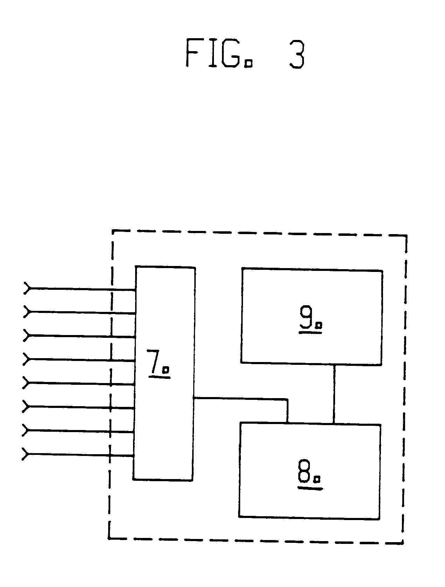

Apparatus for carrying out the method according to the present invention is illustrated schematically in Figure 3, where the reference numeral 7 designates a data logger having eight channels, the reference numeral 8 designates a computer which controls the data logger and carries out the requisite determinations and calculations, and the reference numeral 9 designates a presentation unit, suitably a small printer. All of the apparatus can be integrated to form a unit capable of being carried in a simple, portable bag.

Thus, the aforesaid measuring values utilized by the computer 8 for determining the Points K1, K2, and K3, are first collected in the data logger 7, see Figure 2. The line joining the points K1, and K2 thus represents compression of the totally gaseous refrigerant in the compressor to the pressure $p_1$. The line joining the points K2 and K3 represents the phase conversion of the refrigerant in the condenser 2 from a fully gaseous state at point K2 to a completely liquid state at point K3, with the pressure held substantially constant. The vertical downwardly sloping line extending from point K3 represents a decrease in pressure, which is assumed here to take place at constant enthalpy. Vapourization then takes place up to the point K1 on the diagram, essentially at constant pressure. The exact position of the corner point of the characteristic between K3 and K1 is not so critical in the case of heat pumps. This point is highly significant, however, in the case of cold generating processes, and can be calculated with the aid of the computer.

Subsequent to establishing the key points K1, K2 and K3, the computer can determine the points K4, K5 and K6 on the basis of these key points and on the basis of the information stored in the computer with regard to the refrigerant diagram, particularly the upper and lower curve limits of the vapour pressure curve. The point K4 is therewith determined as the intersection point between the pressure $p_2$ at K1 and the upper limit curve of the vapour pressure curve, which provides the vapourization or evaporation temperature, which is an important basic data, and a measurement of the overheating at point K1. It is necessary to overheat to a certain degree, so as to ensure that only vapour will enter the compressor, since liquid droplets are liable to result in damage. The point K5 represents the point of intersection between the pressure $p_1$ at point K2 and the upper limit curve, and indicates the condensing temperature, which is another piece of basic information. The point K6 at the intersection between the pressure $p_1$ and the lower limit curve can be used to determine the undercooling at the point K3.

The basic determination of vapourization temperature, condensing temperature, overheating and undercooling provide valuable information for a service technician when tuning or balancing the system. In order to establish the performance of the system, however, it is also necessary to determine the coefficient of process performance and also the heating power produced, or heat emission. To this end the ideal coefficient of performance $C_I$ of the process is calculated by determining the enthalpies H1, H2 and H3 for the three key points K1, K2 and K3 respectively by the computer with the aid of the stored information defining the refrigerant diagram. $C_I$ is then calculated as

$$C_I = \frac{H2 - H3}{H2 - H1} \cdot$$

When determining the enthalpies at said points mathematically, the computer first determines the voluminals at these points, and also at the points K4, K5 and K6. The enthalpies can then be readily computed by the computer. These voluminal determinations are also effect d on the basis of the stored refrigerant diagram information.

The aforementioned ideal coefficient of performance $C_I$ is never reached, due inter alia to thermal losses in the compressor which must be determined in order to calculate the true or prevailing coefficient of performance $C_V$ of the process. The thermal efficiency $\eta_T$ of the compressor can be determined empirically or can be calculated, whereafter a correction herefor is made so that

$$C_V = \frac{H2 - H3}{H2 - H1} \eta_T \cdot$$

Although it is possible to calculate the thermal efficiency of the compressor, it has been found very surprisingly that a very high degree of accuracy can be reached when using an empirical value for $\eta_T$ of between 90 - 95% in the case of conventional systems.

This method of utilizing the thermal efficiency of the compressor enables the true coefficient of performance of the process to be calculated extremely accurately by means of the aforedescribed novel method, which has been received with great surprise by those skilled in this art. This calculation is based on the realization that all energy supplied to the compressor is utilized by the process with the exception of the thermal energy lost in the compressor.

The coefficient of process performance calculated above can be utilized to determine the heating power generated by the process in a novel and simple manner, by multiplying said coefficient with the value of the electrical energy supplied to the compressor, this energy being detected by means of the data logger 7.

In order to determine the condition of the compressor, which is highly significant to the performance of the heat pump, the enthalpy H7 is determined at the point K7 which represents the point of intersection between the isentrope passing through the point K1 and the pressure at the point K2. A quality factor $Q_K$ for the compressor can then be calculated as

$$\frac{H7 - H1}{H2 - H1} \cdot$$

In addition to earlier mentioned basic parameters for the refrigerating process a highly representative foundation for determining the efficiency of the refrigerating process and its performance, and for optimizing the same, can be obtained by complementing with a coefficient of performance, heating power and compressor function, since the aforesaid values can be determined at short intervals in conjunction with tuning or testing the system.

In order to provide a complete definition of the operating condition of the system apparatus, the temperatures of the incoming cold carrier and the departing heat carrier can also be collected with the aid of the data logger and presented together with the aforementioned parameters. As will be understood by those skilled in this art, the Carnot efficiency, mass flow, and volume flow can also be determined without the aid of flow meters.

The aforedescribed method is based on the assumption that the refrigerant will actually work as anticipated in theory, and that the system will only give off energy to the surroundings via heat emitting components, in this case the condenser, and as a result of the thermal losses in the compressor. The influence of the pressure drop across the condenser and evaporator has also been assumed to be negligible. The described process also represents a single stage process without internal heat exchange. It will be understood, however, that the principles also apply in the case of multi-stage systems. In the case of more complicated systems, additional pressure and temperature measurements can be made to the extent necessary to define the process. Thus, one important advantage afforded by the method according to the invention is that unstable processes can also be measured with a high degree of accuracy, as can also changes in the course taken by the process, and that the method enables adjustments to be made to the process as measurements are being taken.

This enables the method to be applied when wishing to control a refrigerating process automatically, in which case the expansion device suitably includes a control mechanism optionally of conventional kind. This mechanism is regulated in accordance with the invention on the basis of the coefficient of performance and/or the heating power calculated in accordance with said method, depending upon whether one is primarily interested in an optimal function of the process or in obtaining the highest possible heat emission. When applied in this way the method will thus enable the whole process to be controlled very accurately, since the result of each adjustment to the system can be detected immediately and compared with stored set point values or limit values. The actual control function can be carried out in a known manner and will not be described in detail here.

Thus, the principle features of the invention can be utilized to provide a novel, effective and highly accurate control apparatus for use with refrigerating processes. The particular novelty of this apparatus is that it includes a data logger and a computer for collecting and processing the measuring values simultaneously, in accordance with the aforegoing, said computer being programmed with information defining the refrigerant diagram for the refrigerant used. The computer calculates, in the aforedescribed manner, the true coefficient of performance $C_V$ and/or the generated heating power, heat emission, which values can be used for influencing the process control means, suitably arranged in the expansion device, in a manner known per se.

## Claims

1. Method of determining the actual coefficient of performance of a compressor refrigeration process, comprising the following steps:

    a) measuring the pressure and the temperature of the refrigerant upstream and downstream of the compressor and the temperature downstream of the condenser;

    b) determining the pressure of the refrigerant downstream of the condenser by assuming it to be equal to that downstream of the compressor:

    c) supplying the pressure and temperature values of steps a) and b) to a computer for determining three key points (K1, K2, K3) in the phase diagram of the refrigerant with the aid of information defining said phase diagram stored in the computer;

    d) calculating, with the aid of said information in the computer, the enthalpies (H1, H2, H3) of the refrigerant at said key points (K1, K2, K3) and the ideal coefficient of performance; and

    e) calculating the actual coefficient of performance by multiplication of the ideal coefficient of performance with a correction factor which compensates for the losses in the process.

2. A method according to Claim 1, characterized in that the correction factor comprises a calculated value or an empirical value of the thermal efficiency $\eta_T$ of the compressor.

3. A method according to Claim 2, characterized in that the empirical value of $\eta_T$ in the case of conventional compressors comprises a value between 90-97 %.

4. A method according to any of Claims 1 - 3, characterized in that the value of the drive energy supplied to the compressor is also entered into the computer; and in that the heating power generated by the process is calculated as the product of said drive energy and the actual coefficient of performance.

5. A method according to any of Claims 1 - 4, characterized in that the enthalpy H7 is determined for a point K7 on said diagram representative of the point of intersection between the isentrope through the point K1 and the pressure at point K2; and in that a quality factor $Q_K$ for the compressor is calculated as

$$Q_K = \frac{H7 - H1}{H2 - H1}.$$

6. The use of a method according to any of Claims 1 - 5 for automatically controlling a refrigerating process, characterized in that an adjustable expansion device for controlling the process is regulated, inter alia, on the basis of the actual coefficient of performance and/or the generated heating power.

7. Control apparatus for a refrigerating process carried out with the aid of a refrigerant which is caused to circulate in a closed circuit incorporating a compressor, a condenser, an expansion device and an evaporator, the expansion device being provided with automatically actuable regulating means, characterized in that said device includes means for calculating the actual coefficient of performance of the process in accordance with any of Claims 1 - 3 and/or the heating power generated by the process in accordance with Claim 4; and in that the regulating means are actuated in dependence on said actual coefficient of performance and/or said generated heating power.

**Patentansprüche**

1. Verfahren zum Bestimmen der tatsächlichen Leistungsziffer eines Kompressorkälteprozesses, bestehend aus folgenden Schritten:
   a) Messen des Druckes und der Temperatur des Kältemittels vor und nach dem Kompressor und der Temperatur nach dem Kondensator;
   b) Bestimmen des Druckes des Kältemittels nach dem Kondensator, wobei angenommen wird, daß er gleich dem nach dem Kompressor ist;
   c) Liefern der Druck- und Temperaturwerte der Schritte a) und b) an einen Computer zum Bestimmen von drei Eckpunkten (K1, K2, K3) in dem Phasendiagramm des Kältemittels mit Hilfe von Informationen, die das im Computer gespeicherte Phasendiagramm definieren;
   d) Berechnen, mit Hilfe der Informationen im Computer, der Enthalpien (H1, H2, H3) des Kältemittels an den Eckpunkten (K1, K2, K3) und der idealen Leistungsziffer; und
   e) Berechnen der tatsächlichen Leistungsziffer durch Multiplikation der idealen Leistungsziffer mit einem Korrekturfaktor, der die Verluste in dem Prozeß ausgleicht.

2. Verfahren gemäß Anspruch 1, dadurch gekennzeichnet, daß der Korrekturfaktor einen berechneten Wert oder einen empirischen Wert des thermischen Wirkungsgrades $\eta_T$ des Kompressors aufweist.

3. Verfahren gemäß Anspruch 2, dadurch gekennzeichnet, daß der empirische Wert von $\eta_T$ im Fall von konventionellen Kompressoren einen Wert zwischen 90 bis 97% hat.

4. Verfahren gemäß einem der Ansprüche 1 bis 3, dadurch gekennzeichnet, daß der Wert der zum Kompressor zugeführten Antriebsenergie auch in den Computer eingegeben wird; und dadurch, daß die durch den Prozeß erzeugte Wärmeleistung berechnet wird als das Produkt der Antriebsenergie und der tatsächlichen Leistungsziffer.

5. Verfahren gemäß einem der Ansprüche 1 bis 4, dadurch gekennzeichnet, daß die Enthalpie H7 an einem Punkt K7 im Diagramm bestimmt wird, der repräsentativ für den Schnittpunkt zwischen der Isentrope durch den Punkt K1 und den Druck im Punkt K2 ist; und dadurch, daß ein Qualitätsfaktor $Q_K$ für den Kompressor berechnet wird als $Q_K = (H7 - H1)/(H2 - H1)$.

6. Anwendung des Verfahrens gemäß einem der Ansprüche 1 bis 5 für das automatische Steuern eines Kälteprozesses, dadurch gekennzeichnet, daß eine anpaßbare Expansionsvorrichtung für die Steuerung des Prozesses reguliert wird, unter anderem auf der Basis der tatsächlichen Leistungsziffer und/oder der erzeugten Wärmeleistung.

7. Steuergerät für einen Kälteprozeß, der mit Hilfe eines Kältemittels ausgeführt wird, das veranlaßt wird, in einem geschlossenen Kreislauf zu zirkulieren, das einen Kompressor, einen Kondensator, eine Expansionsvorrichtung und einen Verdampfer beinhaltet, wobei die Expansionsvorrichtung mit einer automatisch betätigbaren Reguliereinrichtung versehen ist, dadurch gekennzeichnet, daß dieses Gerät eine Vorrichtung zur Berechnung der tatsächlichen Leistungsziffer des Prozesses gemäß einem der Ansprüche 1 bis 3 und/oder der durch den Prozeß erzeugten Wärmeleistung gemäß Anspruch 4 beinhaltet; und dadurch, daß die Reguliereinrichtung in Abhängigkeit von der tatsächlichen Leistungsziffer und/oder der erzeugten Wärmeleistung betätigt wird.

**Revendications**

1. Procédé de détermination du coefficient de performance réel d'un processus de réfrigération à compresseur, comprenant les phases suivantes :
   a) mesurer la pression et la température du réfrigérant en amont et en aval du compresseur et la température en aval du condenseur ;
   b) déterminer la pression du réfrigérant en aval du condenseur en supposant qu'elle est égale à celle en aval du compresseur ;

c) transmettre les valeurs de pression et de température des phases a) et b) à un ordinateur pour déterminer trois points-clés (K1, K2, K3) du diagramme de phase du réfrigérant, à l'aide d'une information définissant ledit diagramme de phase qui est mémorisé dans l'ordinateur ;

d) calculer, à l'aide de ladite information contenue dans l'ordinateur, les enthalpies (H1, H2, H3) du réfrigérant auxdits points-clés (K1, K2, K3) et le coefficient de performance théorique ;

e) calculer le coefficient de performance réel en multipliant le coefficient de performance théorique par un facteur de correction qui compense les pertes dans le processus.

2. Procédé selon la revendication 1, caractérisé en ce que le facteur de correction comprend une valeur calculée ou une valeur empirique du rendement thermique $\eta_T$ du compresseur.

3. Procédé selon la revendication 2, caractérisé en ce que la valeur empirique de $\eta_T$ dans le cas des compresseurs classiques est une valeur d'entre 90 et 97 %.

4. Procédé selon une quelconque des revendications 1 à 3, caractérisé en ce que la valeur de l'énergie d'entraînement fournie au compresseur est elle aussi introduite dans l'ordinateur et en ce que la puissance de chauffage engendrée par le processus est calculée sous la forme du produit de ladite énergie d'entraînement par le coefficient de performance réel.

5. Procédé selon une quelconque des revendications 1 à 4, caractérisé en ce que l'enthalpie H7 est déterminée pour un point K7 dudit diagramme qui est représentatif du point d'intersection entre l'isentrope passant par le point K1 et la pression au point K2 ; et en ce qu'un facteur de qualité $Q_K$ du compresseur est calculé par la formule

$$Q_K = \frac{H7 - H1}{H2 - H1}.$$

6. Utilisation d'un procédé selon une quelconque des revendications 1 à 5 pour commander automatiquement un processus de réfrigération, caractérisée en ce qu'un dispositif détendeur réglable servant à commander le processus est régulé, entre autre, sur la base du coefficient de performance réel et/ou de la puissance de chauffage engendrée.

7. Dispositif de commande pour un processus de réfrigération exécuté à l'aide d'un réfrigérant qu'on fait circuler dans un circuit fermé comprenant un compresseur, un condenseur, un dispositif détendeur et un évaporateur, le dispositif détendeur étant équipé de moyens de régulation qui peuvent être actionnés automatiquement, caractérisé en ce que ledit dispositif comprend des moyens servant à calculer le coefficient de performance réel du processus selon une quelconque des revendications 1 à 3 et/ou la puissance de chauffage engendrée par le processus selon la revendication 4, et en ce que les moyens de régulation sont actionnés en fonction dudit coefficient de performance réel et/ou de ladite puissance de chauffage engendrée.

# FIG. 1

Fig.2

EP 0 412 959 B1

10

# FIG. 3